# FASCICULE DE BREVET EUROPEEN

(11) **EP 3 356 195 B1**
(45) Date de publication et mention de la délivrance du brevet: **30.10.2019**
(21) Numéro de dépôt: 16767332.6
(22) Date de dépôt: 05.09.2016
(51) Int. Cl.: B60W 10/06, B60W 10/10, F16H 61/00, F02D 41/02, F02D 41/08, B60W 30/19, F02D 41/16, B60W 30/188

(54) **DISPOSITIF DE CONTRÔLE DU DÉCLENCHEMENT D'UNE RÉGULATION D'UN RÉGIME RALENTI D'UN MOTEUR À COMBUSTION INTERNE**
STEUERVORRICHTUNG ZUM AUSLÖSEN DER LEERLAUFDREHZAHLREGELUNG EINER BRENNKRAFTMASCHINE
CONTROL DEVICE FOR ACTIVATING THE IDLE SPEED CONTROL OF AN INTERNAL COMBUSTION ENGINE

(30) Priorité: 01.10.2015 FR 1559338
(43) Date de publication de la demande: 08.08.2018
(73) Titulaire: PSA AUTOMOBILES S.A., 78300 Poissy (FR)
(72) Inventeur: PONG, Philippe, 92120 Montrouge (FR); DOURSTER, Maximilien, 75017 Paris (FR)
(86) Numéro de dépôt international: PCT/FR2016/052197
(87) Numéro de publication internationale: WO 2017/055697

(56) Documents cités:
- WO-A1-01/48361
- WO-A1-03/078197
- WO-A1-2015/071563
- DE-A1-102010 028 069
- DE-A1-102013 214 241
- US-A1- 2010 131 160

## Description

L'invention s'inscrit dans le domaine du contrôle du régime du moteur thermique d'un véhicule automobile à boîte de vitesses, pendant les changements montants de rapport de vitesses.

A l'approche d'un passage de rapport de vitesses montant, le moteur fournit plus de couple pour que le régime du moteur, c'est-à-dire sa vitesse de rotation, augmente. Le passage de rapport de vitesses est précédé d'une ouverture de la chaîne de traction. Si la boîte est automatique, la chaîne de traction est ouverte via le rapport de démultiplication. Si la boîte est manuelle, la chaîne de traction est ouverte par un débrayage.

Pendant le passage de rapport de vitesses montant, le couple demandé au moteur est momentanément diminué. Dans le cas d'une boîte de vitesses manuelle, le couple est diminué par le fait que le conducteur lève le pied de la pédale d'accélérateur tout en procédant au passage de rapport. Dans le cas d'une boîte de vitesses automatique, le couple est diminué par un mécanisme d'estompage de couple mis en œuvre par la boîte de vitesses, qui ne tient pas compte de la commande du conducteur qui appui sur l'accélérateur pour accélérer, mais au contraire diminue le couple jusqu'à ce que celui-ci soit proche de 0 au début du passage de rapport.

On cherche, de manière générale, à diminuer la consommation des véhicules automobiles en matière de carburants fossiles. En boîte automatique ou manuelle pour réduire la consommation, on essaie de changer de rapport le plus rapidement possible. Par contre on essaie aussi de le faire au régime moteur le plus bas possible. Par exemple, au lieu d'accélérer jusqu'à 2000tr/min pour ouvrir la chaîne de traction, on va l'ouvrir à 1500tr/min et changer de rapport le plus rapidement possible. Pour les boîtes automatiques, on cherche donc à refermer la chaîne de traction le plus tôt possible pour perdre le moins d'énergie possible.

De plus, de plus en plus souvent sur les boîtes automatiques de nouvelle génération, on n'ouvre pas le convertisseur, ce qui accélère la diminution de régime moteur, du fait de l'inertie du convertisseur.

Mais ces stratégies se heurtent au déclenchement de la fonction ralenti, qui a traditionnellement pour objet de maintenir le moteur à un régime suffisant pour qu'il ne cale pas. Ce régime est régulé par une fonction de régulation de régime ralenti. La fonction de régulation de régime ralenti se déclenche si le régime diminue jusqu'à une valeur seuil, ou s'il diminue avec un gradient trop fort. Elle génère une consigne de régime ralenti. Néanmoins le déclenchement de la fonction de régulation de régime ralenti n'est actuellement pas adapté précisément à la situation dans laquelle le véhicule se trouve, et fonctionne comme si le rapport de vitesse enclenché était en fait le neutre.

Ainsi, la fonction de régulation de régime ralenti se déclenche souvent lorsqu'une stratégie de diminution du couple est mise en œuvre, lui retirant alors ses effets. Cette situation allonge par ailleurs la durée du passage de rapport de vitesses, diminuant le confort du conducteur et augmentant la consommation.

EP1574707 enseigne de diminuer le régime du moteur tournant au ralenti si le véhicule entre en mouvement. Cependant, cette diminution de régime est appliquée dans le cas d'un passage du neutre à la conduite en marche avant (drive) et en chauffe catalyseur où la consigne de régime est élevée. Il s'agit donc d'une situation très particulière, peu généralisable.

WO 03/078197 A1, WO 01/48361 A1 et US 2010/131160 A1 décrivent aussi des dispositifs de contrôle du déclenchement d'une régulation de régime ralenti d'un moteur thermique lors d'un changement de rapport de vitesses.

Il est par ailleurs soumis ici que simplement désactiver la fonction ralenti et sa régulation, avec une boîte automatique, si la boîte indique qu'un passage de vitesse montant est en cours, présente l'inconvénient que dans certaines situations, on ne peut éviter le calage du moteur.

L'invention vise à encore réduire la consommation énergétique et à procurer un confort de conduite supérieur au conducteur, tout en évitant les risques de calage du moteur.

Pour cela il est proposé un dispositif de contrôle du déclenchement d'une régulation de régime ralenti d'un moteur thermique de véhicule automobile à boîte de vitesses, le dispositif comprenant des moyens pour recevoir une consigne de régime ralenti, une valeur courante de régime moteur et une identification du rapport de vitesses engagé, des moyens pour déclencher la régulation du ralenti pour éviter un calage du moteur lorsque des conditions de déclenchement sont réalisées, le dispositif comprenant aussi des moyens pour restreindre, en réaction à un début d'un passage de rapport de vitesses montant du rapport de vitesse engagé vers un rapport de vitesse à engager, les conditions de déclenchement de la régulation de régime ralenti si la valeur de régime au début du passage de rapport est supérieure à un seuil de régime dit « seuil de régime initial » choisi en fonction du rapport de vitesses engagé au début du passage de rapport de vitesses montant pour éviter un calage du moteur à la fin du passage de rapport de vitesses montant.

D'autres caractéristiques, optionnelles, de l'invention s'énonce comme suit :
- la boîte est manuelle, et le dispositif est configuré pour recevoir une valeur courante d'enfoncement de la pédale d'embrayage et détecter un début de passage de rapport de vitesses montant en fonction de la valeur courante d'enfoncement de la pédale d'embrayage et d'une valeur de seuil prédéterminée pour l'enfoncement de la pédale d'embrayage ;
- le dispositif est configuré pour cesser de restreindre les conditions de déclenchement de la régulation de régime ralenti si la valeur courante de régime est inférieure à un seuil dit « seuil de régime courant » pour éviter un calage du moteur à la fin du passage de rapport de vitesses montant ;
- le dispositif est configuré pour recevoir une valeur courante de vitesse du véhicule, et cesser de restreindre les conditions de déclenchement d'une régulation de régime ralenti si la valeur courante de vitesse du véhicule est inférieure à un seuil prédéterminé de vitesse du véhicule ;
- la boîte est automatique, et le dispositif est configuré pour recevoir, de la boîte automatique, une information courante de passage de rapport de vitesses montant ;
- le dispositif est configuré pour recevoir une valeur courante d'enfoncement de la pédale d'accélérateur et cesser de restreindre les conditions de déclenchement de régulation de régime ralenti si ladite valeur courante d'enfoncement de la pédale d'accélérateur est inférieure à un seuil prédéterminé d'enfoncement de la pédale d'accélérateur ;
- le dispositif est configuré pour recevoir une valeur courante de vitesse du véhicule, et une identification du rapport de vitesses cible, calculer ou déterminer à l'aide d'abaques une valeur de régime anticipée pour la fin de la situation de passage de rapports en fonction de la valeur courante de vitesse du véhicule et de l'identification du rapport de vitesses cible, et cesser de restreindre les conditions de déclenchement de régulation de régime ralenti si la valeur de régime anticipée est inférieure à un seuil dit « seuil de régime anticipé » pour éviter un calage du moteur à la fin du passage de rapport de vitesses montant ;
- quelle que soit la technologie de boîte (automatique ou manuelle), le dispositif est configuré pour cesser de restreindre les conditions de déclenchement de régulation de régime ralenti au bout d'une durée prédéterminée, mesurée à partir du début de passage de rapport de vitesses montant ;
- le dispositif est configuré pour recevoir une température courante du moteur et cesser de restreindre les conditions de déclenchement de régulation de régime ralenti si ladite température est supérieure à un seuil prédéterminé de température. ;
- une restriction des conditions de déclenchement de régulation de régime ralenti est effectuée au moins en abaissant un seuil de régime de déclenchement de régulation de régime ralenti ou en augmentant, en valeur absolue, un gradient de régime de déclenchement d'une régulation de régime ralenti ;
- le dispositif est configuré pour recevoir une consigne de régime ralenti et calculer ledit seuil de régime initial en ajoutant à ladite consigne de régime ralenti un décalage de régime choisi dans une table de décalages prédéterminés de régime en fonction du rapport de vitesses engagé au début du passage de rapport pour éviter un calage du moteur à la fin du passage de rapport de vitesses montant.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
La figure 1 présente un schéma d'un premier mode de réalisation de l'invention, pour véhicule automobile à boîte manuelle.
La figure 2 présente un schéma d'un deuxième mode de réalisation de l'invention, pour véhicule automobile à boîte automatique.

À titre préliminaire, on rappelle que le régime ralenti est déclenché et régulé si une des deux conditions suivantes est réalisée : le régime courant tombe en-dessous du seuil de régime de déclenchement, ou le régime courant chute à une vitesse excédant le gradient de déclenchement.

Ainsi, le seuil de régime de déclenchement de la régulation de régime ralenti est le seuil de régime en dessous duquel la régulation de régime ralenti est déclenchée.

Et le gradient de déclenchement de régulation de régime ralenti est la vitesse de diminution du régime, au-dessus de laquelle en valeur absolue, c'est-à-dire en-dessous de laquelle, compte tenu du fait que ce gradient est négatif, le régulateur de régime ralenti est déclenché.

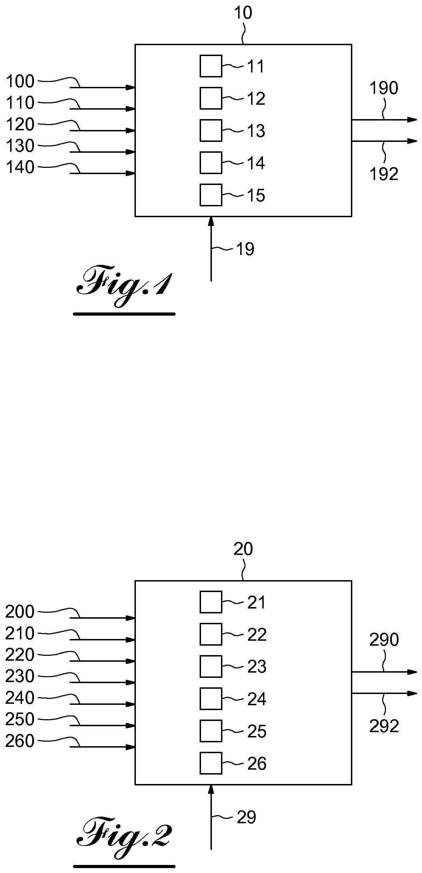

En **figure 1**, on a représenté un premier mode de réalisation de l'invention mise en œuvre pour un véhicule automobile à moteur thermique équipé d'une boîte de vitesses manuelle.

On visualise le dispositif de contrôle 10, qui a pour fonction d'adapter les conditions de déclenchement de la régulation de régime ralenti, et plus précisément de restreindre les conditions de déclenchement du régulateur de régime ralenti, quand cela est judicieux, pendant les passages de rapport de vitesses montant.

Le dispositif comprend, en mémoire,
- un seuil prédéterminé d'enfoncement de pédale d'embrayage 11,
- un décalage prédéterminé de régime 12, à additionner à la consigne de régime ralenti pour obtenir un seuil de régime courant,
- un seuil prédéterminé de vitesse de véhicule 13,
- une durée maximale de mise en œuvre 14,
- un seuil prédéterminé de température du moteur 15 et
- une table de décalages prédéterminés de régime initial associés aux rapports de vitesses 16, à additionner à la consigne de régime ralenti 29.

Le dispositif de contrôle 10 reçoit en entrée des valeurs courantes. Il reçoit en particulier une valeur courante de régime moteur 100, une identification du rapport de vitesses engagé 110, une valeur courante d'enfoncement de la pédale d'embrayage 120 (exprimée par exemple en pourcentage), une valeur courante de vitesse du véhicule 130 et une température courante du moteur 140.

Le dispositif de contrôle 10 reçoit également une consigne de régime ralenti 19.

Le dispositif de contrôle 10 peut fournir en sortie un seuil adapté (diminué) de régime de déclenchement de régulation de régime ralenti 190 et un gradient adapté (augmenté en valeur absolu) de régime de déclenchement de régulation de régime ralenti 192.

Le fonctionnement interne du dispositif de contrôle 10 est le suivant : Il vérifie dans une première étape la réalisation simultanée de trois conditions, pour détecter la situation de passage de rapport de vitesses montant.

Pour cela, il compare tout d'abord la valeur courante d'enfoncement de la pédale d'embrayage 120 avec le seuil prédéterminé d'enfoncement de la pédale d'embrayage 11. L'enfoncement de la pédale, par le conducteur, constitue naturellement une première condition pour la détection de la situation de passage de rapport de vitesses montant. Dans le mode de réalisation présenté, le seuil prédéterminé d'enfoncement de pédale d'embrayage 11 comporte deux valeurs, une valeur haute et une valeur basse, permettant la mise en place d'un hystérésis pour filtrer l'action du conducteur.

Une deuxième condition à la détection d'un passage de rapport de vitesses montant est le dépassement par la valeur courante de vitesse du véhicule 130 du seuil prédéterminé de vitesse du véhicule 13. En effet, il est prévu d'exclure les situations dans lequel le véhicule a une vitesse très faible, puisqu'un passage de rapport de vitesses montant par le conducteur doit se faire alors que le véhicule est en mouvement. Le seuil prédéterminé de vitesse de véhicule 13 peut être un seuil complexe comportant une valeur haute et une valeur basse permettant la mise en place d'un hystérésis aux fins de la détection pour filtrer les fluctuations de la vitesse.

Une troisième condition pour la détection d'un passage de rapport de vitesses montant est le dépassement par la valeur courante de régime moteur 100 d'un seuil de régime dit « seuil de régime courant ». Ce seuil de régime courant peut être un seuil complexe comprenant une valeur haute et une valeur basse permettant la mise en place d'un hystérésis aux fins de la détection pour filtrer les évolutions du régime liées notamment à l'action du conducteur. Ce seuil de régime courant est déterminé en prenant en compte la consigne de régime ralenti 19, pour éviter un calage du moteur à la fin du passage de rapport de vitesses montant, et un décalage prédéterminé de régime 12 comprenant une valeur haute et une valeur basse.

La mise en place de cette condition assure une sécurité, l'adaptation des conditions du déclenchement de régulation de régime ralenti n'étant pas souhaitable si le régime est déjà bas par rapport à la consigne de régime ralenti 19. Une flexibilité est fournie pour le réglage, via le décalage prédéterminé de régime courant 12.

Si les trois conditions évoquées ci-dessus sont remplies simultanément le dispositif de contrôle 10 réagit à la détection du passage ou de début de passage de rapport de vitesses montant. Sa réaction est décrite ci-après. Dès qu'une des conditions n'est plus active, la réaction est interrompue.

Il mémorise le régime moteur et le rapport de vitesses engagé à l'instant d'enfoncement de la pédale de débrayage, c'est-à-dire le début de passage de rapport de vitesses à l'aide de la valeur courante de régime moteur 100 et de l'identification du rapport de vitesse engagé 110.

La température courante du moteur 140 est alors comparée au seuil prédéterminé de température 15, et une adaptation des conditions de déclenchement de la régulation de régime ralenti n'est mise en œuvre par le dispositif de contrôle 10 que si et tant que la température courante de moteur 140 est inférieure au seuil prédéterminé de température 15. On ne souhaite en effet pas adapter la consigne de régime si le moteur est en surchauffe.

De plus, le dispositif de contrôle 10 compare la valeur de régime moteur mémorisée au moment de l'enfoncement de la pédale d'embrayage (début de passage de rapport de vitesses montant) à un seuil de régime dit « seuil de régime initial » calculé en fonction du rapport de vitesses engagé à l'instant de l'enfoncement de la pédale d'embrayage (début de passage de rapport de vitesses). Ce calcul est effectué en additionnant le décalage de régime choisi au sein de la table de décalages prédéterminés de régime associés aux rapports de vitesses 16 avec la consigne de régime ralenti 19. Le seuil de régime initial choisi est ainsi ajusté, d'une part en fonction du rapport de vitesses, et d'autre part par décalage, pour tenir compte du niveau de la consigne de régime ralenti 19 pour éviter un calage du moteur à la fin du passage de rapport de vitesses montant.

Une adaptation des conditions de déclenchement de la régulation de régime ralenti n'est mise en œuvre par le dispositif de contrôle 10 que si la valeur mémorisée de régime moteur est supérieure au seuil de régime initial calculé ainsi. En effet le passage de rapport de vitesses n'est pas instantané, et le régime du moteur est amené à diminuer pendant le changement. On met ainsi en place une condition pour éviter le calage, avec un seuil qui dépend du rapport de vitesses engagé au moment de l'ouverture de la chaîne de traction.

Enfin, la réaction du dispositif de contrôle 10 comprend l'activation du décompte d'une durée maximale de mise en œuvre de l'adaptation des conditions de déclenchement de la régulation de régime ralenti par le dispositif de contrôle 10.

Le dispositif de contrôle 10 s'interdit alors de produire une adaptation des conditions de déclenchement de la régulation de régime ralenti au-delà de la durée maximale de mise en œuvre prédéterminée 14. En effet le passage de rapport de vitesses ne peut durer indéfiniment.

Une fois ces conditions réunies simultanément, et tant qu'elles le sont, le dispositif de contrôle 10 estime que le véhicule est dans une situation de vie dans laquelle il doit adapter les conditions de déclenchement de la régulation de régime ralenti. Il déclenche donc l'adaptation.

Ainsi, un seuil de régime de déclenchement adapté 190, plus faible que le seuil nominal de régime calibré pour le neutre est généré.

De plus, un gradient de déclenchement de la régulation de régime ralenti adapté 192 est choisi plus raide (plus élevé en valeur absolu) que le gradient de régime pour le ralenti dimensionné pour le neutre, car on ne souhaite déclencher le régulateur de régime ralenti que s'il y a un risque de calage sans tenir compte de l'agrément de conduite. On s'assure que le gradient, une fois que le dispositif d'adaptation de consigne 10 est activé, est plus raide que le gradient initial causé par le débrayage.

Le régime ralenti est alors plus rarement déclenché et régulé au cours d'un passage de rapport montant, car ses conditions de déclenchement sont restreintes. Au moment de la fermeture de la chaîne de traction, le moteur n'envoie pas de couple et donc d'énergie dans la chaîne de traction et la fermeture se fait plus rapidement. Le confort de l'utilisateur est amélioré, et la consommation d'énergie est plus faible.

Le seuil de régime de déclenchement et le gradient de déclenchement sont réinitialisés à la fin de la détection du changement de rapport.

En **figure 2****,** on a représenté un dispositif de contrôle 20 adapté à la mise en œuvre sur un véhicule automobile à moteur thermique comportant une boîte de vitesses automatique.

Le dispositif de contrôle 20 comprend, en mémoire
- des d'abaques 21 de régime moteur en fonction de la vitesse du véhicule et du rapport de vitesses cible, les valeurs de régime étant à comparer avec la consigne de régime ralenti 29,
- un seuil prédéterminé d'enfoncement de la pédale d'accélérateur 22,
- une durée de temporisation prédéterminée 23 pour filtrer la détection du dépassement du seuil d'enfoncement de la pédale d'accélérateur,
- une durée maximale de mise en œuvre de l'adaptation de consigne de régime 24,
- un seuil prédéterminé de température du moteur 25 et
- une table de décalages prédéterminés de régime associés aux rapports de vitesses 26, à additionner à la consigne de régime ralenti 29 pour créer un seuil de régime dit « initial ».

Le dispositif de contrôle 20 reçoit en entrée une valeur courante de régime moteur 200, une identification du rapport de vitesses engagé 210, une information courante selon laquelle un passage de rapport montant est en cours ou non 220, une valeur courante d'enfoncement de la pédale d'accélérateur 230 (exprimée par exemple en pourcentage), une valeur courante de vitesse du véhicule 240, une identification du rapport de vitesses cible 250 (devant être atteint à la fin du passage de rapport courant) et une température courante du moteur thermique 260.

Le dispositif de contrôle 20 reçoit également une consigne de régime ralenti 29.

Le dispositif de contrôle 20 peut fournir en sortie un seuil adapté 290 pour le déclenchement de la régulation de régime ralenti et un gradient adapté (augmenté en valeur absolu) de régime de déclenchement de la régulation de régime ralenti 292.

Le fonctionnement interne du dispositif de contrôle 20 est le suivant : Il vérifie dans une première étape la réalisation simultanée de trois conditions, pour détecter la situation de passage de rapport de vitesses montant.

Tout d'abord, le dispositif de contrôle 20 reçoit une information courante en provenance de la boîte de vitesses automatique selon laquelle un passage de rapport de vitesses montant est en cours ou n'est pas en cours. Cette information est référencée 220.

Le dispositif de contrôle 20 utilise cette information directement, sans influer sur celle-ci. Dans un mode de réalisation, cette information est composée de deux sous-informations : une sous-information indiquant qu'un passage de rapport de vitesses est en cours, et une deuxième sous-information indiquant que le passage de rapport de vitesses en cours est un changement montant. Le caractère positif de l'information 220 est une première condition pour la mise en œuvre du dispositif de contrôle 20.

Le dispositif de contrôle 20 utilise de plus la valeur courante de vitesse du véhicule 240 et l'identification du rapport de vitesses cible 250 pour déterminer à l'aide des abaques 21 de régime en fonction de la vitesse du véhicule et du rapport de vitesses quel sera le régime moteur une fois la chaîne de traction refermée. Il s'agit là d'une valeur de régime anticipée. Les abaques 21 constituent des moyens de calcul d'une valeur de régime anticipée pour la fin du passage de rapports en fonction de la valeur courante de vitesse du véhicule 240 et de l'identification du rapport de vitesses cible 250.

Cette valeur anticipée de régime est comparée à la consigne de régime ralenti 29. Le fait que le dispositif de contrôle 20 constate que le régime anticipé est supérieur et suffisamment distant (d'une valeur de décalage prédéterminée calibrable pour le réglage du dispositif de contrôle 20) de la consigne de régime ralenti 29, pour éviter un calage du moteur à la fin du passage de rapport de vitesses montant, constitue une deuxième condition pour la mise en œuvre du dispositif de contrôle 20. En d'autres termes, on compare la valeur de régime anticipée à un seuil de régime dit « seuil de régime anticipé ».

Le dispositif de contrôle 20 compare de plus la valeur courante d'enfoncement de la pédale d'accélérateur 230, avec le seuil prédéterminé d'enfoncement de la pédale d'accélérateur 22. Le seuil prédéterminé d'enfoncement de la pédale d'accélérateur 22 peut être un seuil complexe comprenant une valeur haute et une valeur basse permettant la mise en place d'un hystérésis pour filtrer l'action du conducteur. Une temporisation est de plus mise en place pendant la durée de temporisation 23. La comparaison permet de n'autoriser la mise en œuvre de l'adaptation de consigne de régime que si le conducteur appuie sur la pédale d'accélérateur pendant le passage de rapport de vitesses. Ainsi, on s'assure que le couple fait l'objet d'un estompage. Si le couple ne fait pas l'objet d'un estompage, l'adaptation de consigne de régime n'est pas envisagée. Le dépassement du seuil prédéterminé d'enfoncement de la pédale d'accélérateur 22 constitue la troisième condition pour la mise en œuvre du dispositif de contrôle 20.

Si les trois conditions évoquées ci-dessus sont remplies simultanément et tant qu'elles le sont le dispositif de contrôle 20 réagit à la détection du passage ou du début de passage de rapport de vitesses montant, d'une manière similaire à celle présentée en lien avec le premier mode de réalisation de l'invention. Sa réaction est la suivante.

Il mémorise le régime moteur et le rapport de vitesses à l'instant de début de passage de rapport, c'est-à-dire l'instant auquel l'information selon laquelle un passage de rapport montant est en cours devient positive, à l'aide de la valeur courante de régime moteur 200 et de l'identification du rapport de vitesse engagé 210.

La température courante du moteur 260 est comparée au seuil prédéterminé de température 25, et une adaptation des conditions de déclenchement de la régulation de régime ralenti n'est mise en œuvre par le dispositif de contrôle 20 que si et tant que la température courante de moteur 260 est inférieure au seuil prédéterminé de température 25.

De plus, le dispositif de contrôle 20 compare la valeur de régime moteur mémorisée au moment du début de passage de rapport à un seuil de régime dit « seuil de régime initial » calculé en fonction du rapport de vitesses engagé à l'instant du début de passage de rapport. Le calcul est effectué en additionnant un décalage prédéterminé de régime choisi au sein de la table de décalages prédéterminés de régime initial associés aux rapports de vitesses 26, avec la consigne de régime ralenti 29. Le seuil de régime initial ainsi calculé est ainsi ajusté, par décalage, pour tenir compte du niveau de la consigne de régime ralenti 29 pour éviter un calage du moteur à la fin du passage de rapport de vitesses montant. Il est de plus choisi en fonction du rapport de vitesses engagé à l'instant du début de passage de rapport.

Une adaptation des conditions de déclenchement de la régulation de régime ralenti n'est mise en œuvre par le dispositif de contrôle 20 que si la valeur mémorisée de régime moteur est supérieure au seuil de régime initial choisi à l'aide la table de décalages 26. On met ainsi en place une condition pour éviter le calage.

Enfin, la réaction du dispositif de contrôle 20 comprend l'activation du décompte d'une durée de mise en œuvre de l'adaptation de conditions de déclenchement de la régulation de régime ralenti par le dispositif de contrôle 20.

Le dispositif de contrôle 20 s'interdit alors de produire une consigne de régime adaptée 290 au-delà de la durée maximale de mise en œuvre prédéterminée 24.

Une fois ces conditions réunies simultanément, et tant qu'elles le sont, le dispositif de contrôle 20 estime que le véhicule est dans une situation de vie dans laquelle il doit adapter les conditions de déclenchement de la régulation de régime ralenti. Il déclenche donc l'adaptation.

Il agit en sorte de ne pas activer et réguler le régime ralenti. Ainsi, un seuil de régime de déclenchement de la régulation de régime ralenti adapté 290, plus faible que le seuil de régime de déclenchement de la régulation de régime ralenti dimensionné pour le neutre est générée.

De plus, le gradient de régime déclenchement adapté 292 est choisi plus raide (plus élevé en valeur absolue) que le gradient de régime de déclenchement dimensionné pour le neutre, car la chute de régime lors d'un passage de rapport de vitesses montant est plus forte qu'une chute de régime au neutre, notamment dans le cas des boîtes de vitesses automatiques avec passage de rapports de vitesses avec le convertisseur ponté. On s'assure que le gradient généré est plus raide que le gradient initial causé par l'ouverture de la chaîne de traction.

Le régime ralenti est donc déclenché et régulé moins souvent car ses conditions de déclenchement sont restreintes. Au moment de la fermeture de la chaîne de traction, le moteur n'envoie pas de couple et donc d'énergie dans la chaîne et la fermeture se fait plus rapidement. Le confort de l'utilisateur est amélioré, et la consommation d'énergie est plus faible.

Le seuil de régime de déclenchement et le gradient de déclenchement sont réinitialisés à la fin de la détection du changement de rapport.

L'invention est mise en œuvre, par exemple, sous la forme d'un logiciel qui peut être utilisé soit avec une boîte automatique, soit avec une boîte manuelle.

## Revendications

1. Dispositif (10 ; 20) de contrôle du déclenchement d'une régulation de régime ralenti d'un moteur thermique de véhicule automobile à boîte de vitesses, le dispositif comprenant des moyens pour recevoir une valeur courante de régime moteur (100 ; 200) et une identification du rapport de vitesses engagé (110 ; 210), des moyens pour déclencher la régulation du ralenti pour éviter un calage du moteur lorsque des conditions de déclenchement (190, 192 ; 290, 292) sont réalisées, **caractérisé en ce que** le dispositif comprend aussi des moyens pour restreindre, en réaction à un début d'un passage de rapport de vitesses montant du rapport de vitesse engagé vers un rapport de vitesse à engager, les conditions de déclenchement (190, 192 ; 290, 292) de la régulation de régime ralenti si la valeur de régime (100 ; 200) au début du passage de rapport est supérieure à un seuil de régime dit « seuil de régime initial » choisi en fonction du rapport de vitesses (110 ; 210) engagé au début du passage de rapport de vitesses montant pour éviter un calage du moteur à la fin du passage de rapport de vitesses montant.

2. Dispositif de contrôle selon la revendication 1, dans lequel la boîte est manuelle, et le dispositif est configuré pour recevoir une valeur courante d'enfoncement de la pédale d'embrayage (120) et détecter un début de passage de rapport de vitesses montant en fonction de la valeur courante d'enfoncement de la pédale d'embrayage (120) et d'une valeur de seuil prédéterminée pour l'enfoncement de la pédale d'embrayage (11).

3. Dispositif de contrôle selon la revendication 2, dans lequel le dispositif est configuré pour cesser de restreindre les conditions de déclenchement de régulation de régime ralenti si la valeur courante de régime (100) est inférieure à un seuil de régime dit « seuil de régime courant » pour éviter un calage du moteur à la fin du passage de rapport de vitesses montant.

4. Dispositif de contrôle selon la revendication 2 ou la revendication 3, dans lequel le dispositif est configuré pour recevoir une valeur courante de vitesse du véhicule (130), et cesser de restreindre les conditions de déclenchement de régulation de régime ralenti si la valeur courante de vitesse du véhicule est inférieure à un seuil prédéterminé de vitesse du véhicule (13).

5. Dispositif de contrôle selon la revendication 1, dans lequel la boîte est automatique, et le dispositif est configuré pour recevoir, de la boîte automatique, une information courante de passage de rapport de vitesses montant (220).

6. Dispositif de contrôle selon la revendication 5, dans lequel le dispositif est configuré pour recevoir une valeur courante d'enfoncement de la pédale d'accélérateur (230) et cesser de restreindre les conditions de déclenchement de régulation de régime ralenti si ladite valeur courante d'enfoncement de la pédale d'accélérateur est inférieure à un seuil prédéterminé d'enfoncement de la pédale d'accélérateur (22).

7. Dispositif de contrôle selon la revendication 5 ou la revendication 6, dans lequel le dispositif est configuré pour recevoir une valeur courante de vitesse du véhicule (240), et une identification du rapport de vitesses cible (250), calculer à l'aide d'abaques (21) une valeur de régime anticipée pour la fin de la situation de passage de rapports en fonction de la valeur courante de vitesse du véhicule (240) et de l'identification du rapport de vitesses cible (250), et cesser de restreindre les conditions de déclenchement de la régulation de régime ralenti si la valeur de régime anticipée est inférieure à un seuil de régime dit « seuil de régime anticipé » pour éviter un calage du moteur à la fin du passage de rapport de vitesses montant.

8. Dispositif de contrôle selon l'une des revendications 1 à 7, dans lequel le dispositif est configuré pour cesser de restreindre les conditions de déclenchement de régulation de régime ralenti au bout d'une durée prédéterminée (14 ; 24), mesurée à partir du début de passage de rapport de vitesses montant.

9. Dispositif de contrôle selon l'une des revendications 1 à 8, dans lequel une restriction des conditions de déclenchement de régulation de régime ralenti est effectuée au moins en abaissant un seuil de régime de déclenchement de régulation de régime ralenti (190 ; 290) ou en augmentant, en valeur absolue, un gradient de régime de déclenchement de régulation de régime ralenti (192 ; 292).

10. Dispositif de contrôle selon l'une des revendications 1 à 9, qui est configuré pour recevoir une consigne de régime ralenti (19 ; 29) et calculer ledit seuil de régime initial en ajoutant à ladite consigne de régime ralenti (19 ; 29) un décalage de régime choisi dans une table de décalages prédéterminés de régime (16 ; 26) en fonction du rapport de vitesses (110 ; 210) engagé au début du passage de rapport pour éviter un calage du moteur à la fin du passage de rapport de vitesses montant.

## Patentansprüche

1. Vorrichtung (10; 20) zum Steuern des Auslösens einer Leerlaufdrehzahlregelung einer Brennkraftmaschine eines Kraftfahrzeugs mit Schaltgetriebe, wobei die Vorrichtung Mittel umfasst, um einen aktuellen Motordrehzahlwert (100; 200) und eine Identifikation des eingelegten Gangs (110; 210) zu empfangen, Mittel zum Auslösen der Regelung des Leerlaufs, um ein Abwürgen des Motors zu verhindern, wenn Auslösebedingungen (190, 192; 290, 292) ausgeführt werden, **dadurch gekennzeichnet, dass** die Vorrichtung auch Mittel umfasst, um als Reaktion auf einen Beginn eines aufsteigenden Gangwechsels von dem eingelegten Gangs zu einem einzulegenden Gang die Auslösebedingungen (190, 192; 290, 292) der Leerlaufdrehzahlregelung einzuschränken, falls der Drehzahlwert (100; 200) zu Beginn des Gangwechsels größer ist als ein Drehzahlschwellenwert, der "Beginndrehzahlschwellenwert" genannt wird, der in Abhängigkeit von dem Gang (110; 210), der zu Beginn des aufsteigenden Gangwechsels eingelegt ist, ausgewählt wird, um ein Abwürgen des Motors an dem Ende des aufsteigenden Gangwechsels zu verhindern.

2. Steuervorrichtung nach Anspruch 1, wobei das Schaltgetriebe manuell ist, und die Vorrichtung konfiguriert ist, um einen aktuellen Eindrückwert des Kupplungspedals (120) zu empfangen und einen aufsteigenden Gangwechselbeginn in Abhängigkeit von dem aktuellen Eindrückwert des Kupplungspedals (120) und einem vorbestimmten Schwellenwert für das Eindrücken des Kupplungspedals (11) zu erfassen.

3. Steuervorrichtung nach Anspruch 2, wobei die Vorrichtung konfiguriert ist, um aufzuhören, die Leerlauf-Drehzahlregelungsauslösebedingungen einzuschränken, falls der aktuelle Drehzahlwert (100) kleiner ist als ein Drehzahlschwellenwert, der "aktueller Drehzahlschwellenwert" genannt wird, um ein Abwürgen des Motors an dem Ende des aufsteigenden Gangwechsels zu verhindern.

4. Steuervorrichtung nach Anspruch 2 oder Anspruch 3, wobei die Vorrichtung konfiguriert ist, um einen aktuellen Geschwindigkeitswert des Fahrzeugs (130) zu empfangen und aufzuhören, die Leerlauf-Drehzahlregelungsauslösebedingungen einzuschränken, falls der aktuelle Geschwindigkeitswert des Fahrzeugs kleiner ist als ein vorbestimmter Geschwindigkeitsschwellenwert des Fahrzeugs (13).

5. Vorrichtung nach Anspruch 1, wobei das Schaltgetriebe automatisch ist und die Vorrichtung konfiguriert ist, um von dem Automatikgetriebe eine aktuelle Information des aufsteigenden Gangwechsels (220) zu empfangen.

6. Steuervorrichtung nach Anspruch 5, wobei die Vorrichtung konfiguriert ist, um einen aktuellen Eindrückwert des Gaspedals (230) zu empfangen und aufzuhören, die Leerlauf-Drehzahlregelungsauslösungsbedingungen einzuschränken, falls der aktuelle Eindrückwert des Gaspedals kleiner ist als ein vorbestimmter Eindrückschwellenwert des Gaspedals (22).

7. Steuervorrichtung nach Anspruch 5 oder Anspruch 6, wobei die Vorrichtung konfiguriert ist, um einen aktuellen Geschwindigkeitswert des Fahrzeugs (240) und eine Identifikation des Zielgangs (250) zu empfangen, mit Hilfe von Kurvenblättern (21) einen vorweggenommenen Drehzahlwert für das Ende der Gangwechselsituation in Abhängigkeit von dem aktuellen Geschwindigkeitswert des Fahrzeugs (240) und der Identifikation des Zielgangs (250) zu berechnen, und aufzuhören, die Leerlauf-Drehzahlregelungsauslösebedingungen einzuschränken, falls der vorweggenommene Drehzahlwert kleiner ist als ein Drehzahlschwellenwert, der "vorweggenommener Drehzahlschwellenwert" genannt wird, um ein Abwürgen des Motors an dem Ende des aufsteigenden Gangwechsels zu verhindern.

8. Steuervorrichtung nach einem der Ansprüche 1 bis 7, wobei die Vorrichtung konfiguriert ist, um aufzuhören, die Leerlauf-Drehzahlregelungsauslösebedingungen am Ende einer vorbestimmten Dauer (14; 24), die ausgehend von dem Beginn des aufsteigenden Gangwechsels gemessen wird, einzuschränken.

9. Steuervorrichtung nach einem der Ansprüche 1 bis 8, wobei eine Einschränkung der Leerlaufdrehzahlregelungsauslösebedingungen mindestens durch Senken eines Drehzahlschwellenwerts zum Auslösen von Leerlaufdrehzahlregelung (190; 290) oder durch Steigern im Absolutwert eines Drehzahlgradienten zum Auslösen der Leerlaufdrehzahlregelung (192; 292) ausgeführt wird.

10. Steuervorrichtung nach einem der Ansprüche 1 bis 9, die konfiguriert ist, um einen Leerlaufdrehzahlsollwert (19; 29) zu empfangen und den anfänglichen Drehzahlschwellenwert zu berechnen, indem zu dem Leerlaufsollwert (19; 29) ein Drehzahlversatz, der aus einer Tabelle vorbestimmter Drehzahlversätze (16; 26) in Abhängigkeit von dem Gang (110; 210) ausgewählt wird, der zu Beginn des Gangwechsels eingelegt ist, um ein Abwürgen des Motors an dem Ende des aufsteigenden Gangwechsels zu verhindern.

## Claims

1. A control device (10; 20) for activating an idle speed control of a heat engine of a motor vehicle with a gearbox, the device including means for receiving a current value of engine speed (100; 200) and an identification of the engaged gear ratio (110; 210), means for activating the idle speed control to prevent a stalling of the engine when activating conditions (190, 102; 290, 292) are met, **characterized in that** the device also includes means for restricting, in reaction to a start of an upward gear shift of the engaged gear ratio towards a gear ratio to be engaged, the activating conditions (190, 192; 290, 292) of the idle speed control if the speed value (100; 200) at the start of the gear shift is greater than a speed threshold designated "initial speed threshold" selected as a function of the engaged gear ratio (110; 210) at the start of the upward gear shift to prevent a stalling of the engine at the end of the upward gear shift.

2. The control device according to Claim 1, in which the gearbox is manual, and the device is configured to receive a current value of depression of the clutch pedal (120) and to detect an upward gear shift as a function of the current value of depression of the clutch pedal (120) and of a predetermined threshold value for the depression of the clutch pedal (11).

3. The control device according to Claim 2, in which the device is configured to cease to restrict the activation conditions of idle speed control if the current speed value (100) is less than a speed threshold designated "current speed threshold" to prevent a stalling of the engine at the end of an upward gear shift.

4. The control device according to Claim 2 or Claim 3, in which the device is configured to receive a current speed value of the vehicle (130), and to cease to restrict the activation conditions of idle speed control if the current speed value of the vehicle is less than a predetermined speed threshold of the vehicle (13).

5. The control device according to Claim 1, in which the gearbox is automatic, and the device is configured to receive, from the automatic gearbox, current information of upward gear shift (220).

6. The control device according to Claim 5, in which the device is configured to receive a current value of depression of the accelerator pedal (230) and to cease to restrict the activation conditions of idle speed control if said current value of depression of the accelerator pedal is less than a predetermined threshold of depression of the accelerator pedal (22).

7. The control device according to Claim 5 or Claim 6, in which the device is configured to receive a current speed value of the vehicle (240), and an identification of the target gear ratio (250), to calculate with the aid of abacuses (21) an anticipated speed value for the end of the gear shift situation as a function of the current speed value of the vehicle (240) and of the identification of the target gear ratio (250), and to cease restricting the activation conditions of the idle speed control if the anticipated speed value is less than a speed threshold designated "anticipated speed threshold" to prevent a stalling of the engine at the end of the upward gear shift.

8. The control device according to one of Claims 1 to 7, in which the device is configured to cease to restrict the activation conditions of idle speed control at the end of a predetermined duration (14; 24), measured from the start of upward gear shift.

9. The control device according to one of Claims 1 to 8, in which a restriction of the activation conditions of idle speed control is effected at least by lowering a threshold of activation speed of idle speed control (190; 290) or by increasing, in absolute value, a speed gradient of activation speed of idle speed control (192; 292).

10. The control device according to one of Claims 1 to 9, which is configured to receive an idle speed setpoint (19; 29) and to calculate said initial speed threshold by adding to said idle speed setpoint (19; 20) a speed offset selected from a table of predetermined speed offsets (16; 26) as a function of the engaged gear ratio (110; 210) at the start of the gear shift, to prevent a stalling of the engine at the end of the upward gear shift.
